# EUROPEAN PATENT SPECIFICATION

(11) **EP 0 820 389 B1**
(45) Date of publication and mention of the grant of the patent: **12.07.2000**
(21) Application number: 96907818.7
(22) Date of filing: 08.02.1996
(51) Int. Cl.: B60P 1/64

(54) **MOUNTING SYSTEM FOR RELEASABLE SUPERSTRUCTURES FOR TRUCKS**
MONTAGESYSTEM FÜR DEMONTIERBARE LKW-AUFBAUTEN
SYSTEME DE MONTAGE POUR SUPERSTRUCTURES DETACHABLES POUR CAMIONS

(30) Priority: 21.03.1995 SE 9500996
(43) Date of publication of application: 28.01.1998
(73) Proprietor: Laxo Mekan Aktiebolag, S-702 21 Örebro (SE)
(72) Inventor: PERSSON, Ake, S-702 21 Örebro (SE)
(74) Representative: Avellan-Hultman, Olle
(86) International application number: SE9600150
(87) International publication number: WO9629212

(56) References cited:
- WO-A-91/12153
- US-A- 1 303 854
- US-A- 4 089 539

## Description

The present invention relates to a mounting system for releasable, interchangeable superstructures for various kinds of vehicles like trucks, lorries, tractors, working machines, mobile cranes etc., and the invention is more particularly directed to such a connection system which is formed so that no plays whatsoever can appear between the superstructure and the chassis of the vehicle, or between the superstructure and the "intermediate frame" in case there is such an intermediate frame.

In order to make it possible to use a truck at an optimum it has become usual to form the truck chassis with some type of quick locking means for releasably mounting superstructures thereon, for instance a turn table for a trailer, a load exchanging system, a lift dumper, a tank, a concrete mixing container or any other type of superstructure. Said superstructure is formed with a matching receiver of said locking means, for instance quick locking eyes, ties, locking consoles or similar means. In such case one and the same truck can be used for may different purposes supplied if supplied with different superstructures. Since the truck is thereby not restricted to one specific purpose said truck can be used practically continuously in time. The time that the truck is left still standing is thereby reduced to a minimum.

A superstructure system of the above mentioned type according to the characteristics of the preamble of independent claim 1 is shown for instance in EP-A-0.515.470. The apparatus shown in said publication is formed so that the truck chassis, or the illustrated pre-fabricated "intermediate frame", is formed with U-shaped quick locking consoles in which downwardly projecting connection bars of the superstructure can be introduced and locked by means of transversally extending locking pins which are slideably mounted in the intermediate frame or the truck chassis.

The said previously known system makes it possible to quickly and safely mount the superstructure on the truck and makes it possible to quickly release and remove such superstructure from the truck and to replace a specific superstructure by another type of superstructure. After a certain transportation, or after a certain work is finished using a specific superstructure said superstructure is lifted off the truck and is replaced by another type of superstructure, whereupon the truck can immediately be used for a quite different purpose.

In many cases there can be a slight play between the truck chassis and the superstructure for the reason that the locking pins, for practical and technical reasons, can not press down the connection bars of the superstructure to the bottom of the quick locking consoles. Said locking pins mainly provide a securing means preventing unintentional displacement, and in front of all a lifting off the superstructure from the intermediate frame of the truck chassis. Such plays, which are generally rather small, do not normally cause any disadvantages for ordinary superstructures of the above mentioned type, since the superstructure generally rests fairly steady against the intermediate frame depending on the dead weight of said superstructure.

In some cases, however, even small plays may cause great disadvantages, for instance while using especially heavy superstructures, in particular such superstructures which operate with extendible arms acting as long moment arms, for instance for cranes, extendible ladders, lift platforms and similar apparatus. In such cases it is of great importance that the superstructure is secured with great force to the locking means of the truck chassis, so that there can not appear any relative movements anywhere in the mounting means between the truck chassis and the superstructure.

It is also important that the vehicle chassis is not subjected but to very small transverse loads, preferably no transverse loads at all. If possible any and all clamping forces ought to be vertical forces. It is also preferred that the mounting means is formed so that it can be pressed down with great force, since such mounting can eliminate appearance of such deformities (warpedness) of the chassis frame or the superstructure which may result from the manufacture thereof or that the truck is standing on uneven ground.

The basis of the present invention therefore has be the problem of providing a mounting system for releasable superstructures, in particular for vehicles like trucks, which system provides a very stable, completely play free mounting of a superstructure on a truck chassis and whereby no transverse forces are applied to said truck chassis.

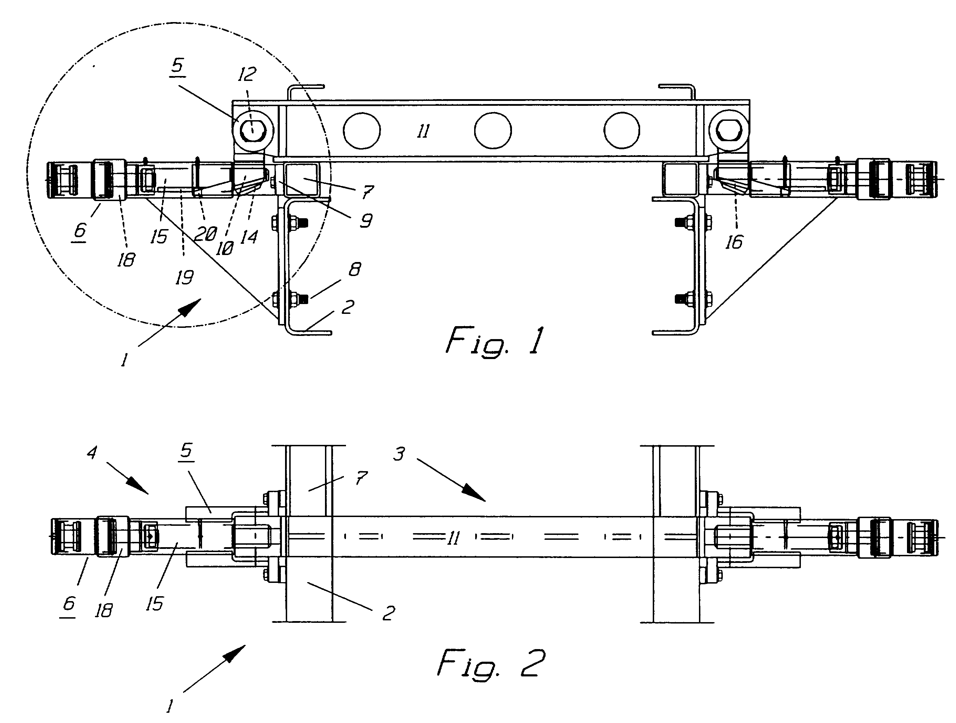

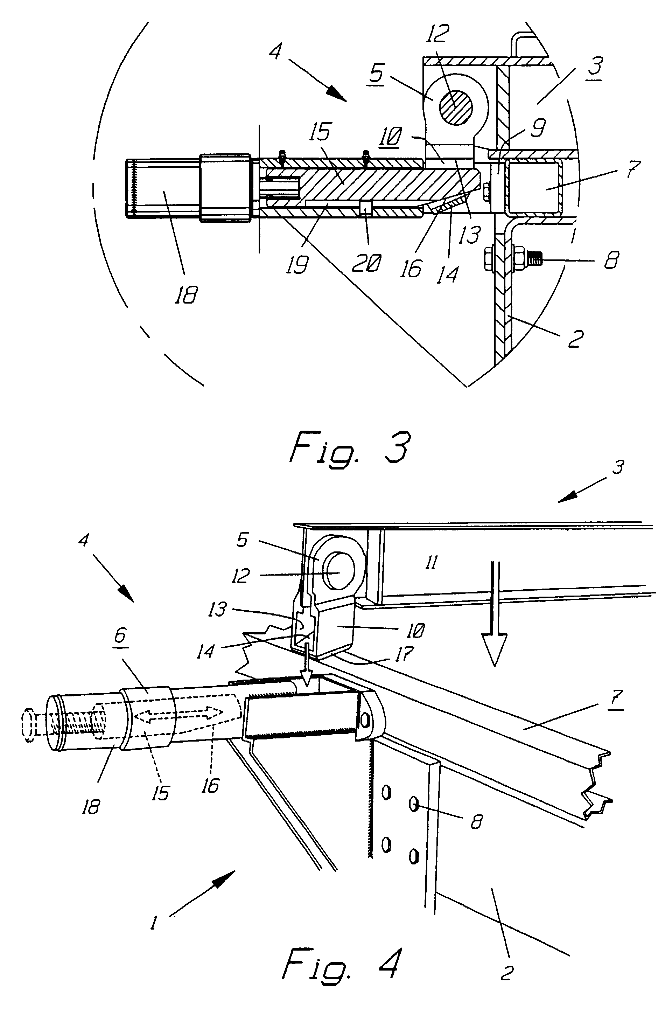

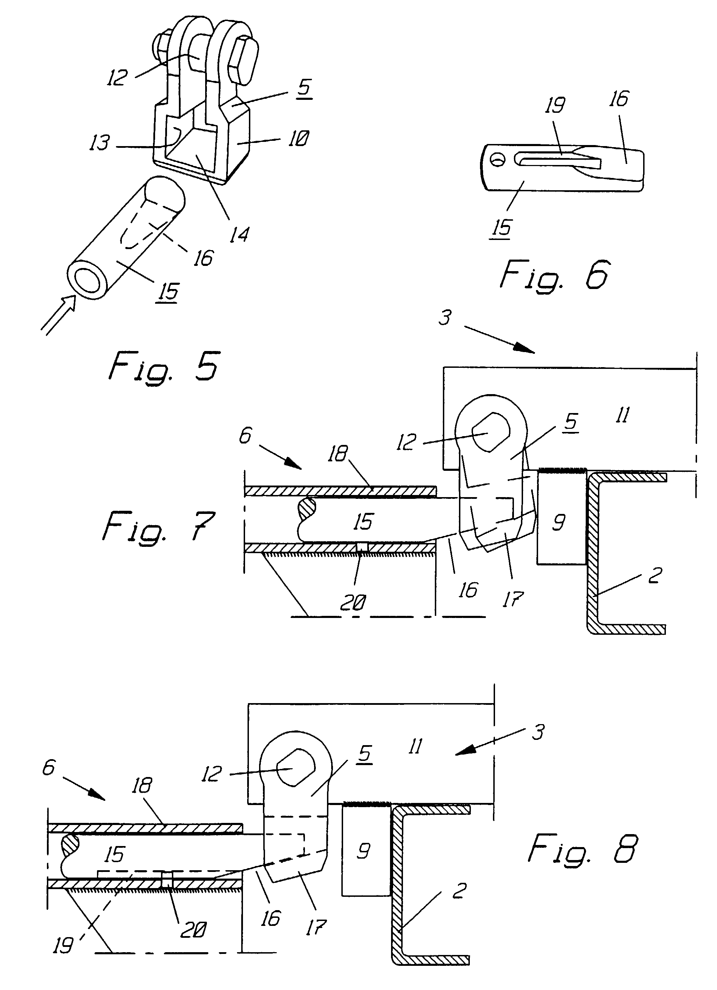

Now the invention is to be described more in detail with reference to the accompanying drawings, in which figure 1 fragmentarily shows a vertical cross section through a truck chassis comprising a mounting system according to the invention and having a diagrammatically indicated superstructure mounted on said chassis. Figure 2 is a top view of the apparatus according to figure 1. Figure 3 is a vertical cross section in a partly cut up state through the encircled part of figure 1. Figure 4 is a perspective view showing the mounting means according to the invention in a state where the superstructure is just about to be lowered to the chassis frame. Figure 5 is a perspective view of a detail of the mounting system according to the invention, and figure 6 shows a wedge formed pin comprised in the system and seen from underneath. Figure 7 illustrates an initial stage of the securing of a superstructure on a truck chassis, and figure 8 shows the system in fully locked position.

Figures 1 and 2 show the mounting system according to the invention applied to a load truck 1, of which only the chassis frame 2 is shown in the drawings. In the drawings there is indicated a superstructure 3 which is arranged easily mountable on and releasable from the truck, so that a certain type of superstructure can quickly and easily be exchanged by another type of superstructure. The superstructure is shown only diagrammatically in the drawings.

For mounting and securing of the superstructure 3 to the truck chassis 2 the apparatus comprises a mounting system 4 comprising a tie means 5 which is mounted in the superstructure 3, and a locking pin means 6 which is connected to the truck chassis 2.

The locking pin means 6 can be mounted directly to the chassis frame 2, but in a preferred embodiment of a superstructure mounting system the locking pin means 6 is mounted in an intermediate frame 7 which carries all locking and connection means and which is prefabricated as a separate unit, which, in such prefabricated condition, is mounted quickly and simply in a very accurate position on the chassis frame, for instance by means of bolts 8.

As mentioned above it is important that there are no plays, for instance in superstructures comprising cranes, person's lift platforms and other heavy apparatus having long extendible arms and other apparatus which, during the handling thereof, can be subjected to high torques. It is also important that the mounting system is designed so that no, or at least only very small, transverse loads appear when the superstructure is secured to the truck chassis. To this end the invention relates to a mounting and securing means which is formed so that the securing of the superstructure is made solely by downwardly acting clamp forces. In the transverse direction the superstructure is kept only by its own transverse guide means, for instance guides 9 as indicated in figures 7 and 8. Eventually existing plays between said guides 9 and the truck chassis 2 are eliminated in that the superstructure, after it has been mounted on the truck chassis, is pressed strongly into contact with the truck chassis, so that the superstructure, in its ready mounted condition, acts as a solid unit integral with the chassis.

The superstructure is formed with four, or if desired more tie means 5 for securing the superstructure on the chassis 2. As best shown in figure 5 each tie means 5 is formed as a yoke 10 which is rotatably mounted in the frame 11 of the superstructure over a shaft 12 extending in the longitudinal direction of the truck and which extends freely through some part of the superstructure frame 11. The yoke 10 is formed with a transverse locking recess 13 which is substantially square in a vertical longitudinal cross section view. The bottom of said locking recess 13 is restricted by an inwards-upwards extending conical bottom surface 14 against which a locking pin 15 having a corresponding wedge formed bottom surface 16 is adapted to be pressed when said locking pin 15 is pressed axially inwards to the chassis frame 11. The locking recess 13 has a height which is substantially greater than that of the locking pin 15, so that the locking pin can be unimpedely moved into said locking recess 13. The tie means 5 are mounted in such a way on both longitudinal sides of the superstructure frame 11 that they can rotate freely a slight distance inwards and outwards, respectively. This possibility of rotation is foreseen for preventing appearance of a transverse load on the superstructure 11 when said superstructure is clamped into engagement with the chassis frame 2. The initial force against said tie means 5 makes same rotate slightly inwardly as indicated with the dotted lines of figure 7. The rotation of the tie means is restricted by the guide 9 of the superstructure. A continued forcing inwards of the locking pin 15 makes the tie means 5 rotate back to the position shown in figure 8, whereby the superstructure is pressed strongly downwards depending on the co-operating contact between the wedge shaped bottom 16 of the pin 15 and the wedge shaped bottom 14 of the locking recess 13. At the same time a superstructure which is eventually standing slightly transversally displaced or obliquely in relation to the truck is straightened up. For facilitating the guiding of the rotatable tie means 5 the bottom edges of said tie means are chamfered as indicated by 17 in the drawings.

The locking pin 15 is horizontally displaceable in a guide sleeve 18 which is a part of the locking means 6 and which is mounted to the truck chassis 2, in the illustrated case actually to the intermediate frame 7. The levels in the vertical direction of the tie means 5 and the locking pin 15 are calculated so that the wedge shaped bottom 16 of the locking pin 15 can be displaced in the locking recess 13 thereby forcing the tie means 5 and thereby the superstructure to the truck chassis 2 or the intermediate frame 7, respectively, under co-operation with the bottom 14 of the yoke 10.

For preventing a large rotation of the locking pin 15 about is longitudinal axis said pin is formed with a guide groove 19 at the bottom side thereof, which guide groove 19 co-operates with a guide pin 20 of the guide sleeve 18. The wedge shaped bottom 16 of the locking pin and/or the wedge shaped bottom 14 of the yoke 10 can be slightly vaulted or convex thereby adapting the locking means to an eventually obliquely standing locking yoke 10. It is desired that the locking pin 15 can rotate slightly about its longitudinal axis so as to adapt itself to an eventually obliquely standing guide groove and for being able to straighten up an eventually obliquely standing tie means 5. Depending on the lineary contact, thereby formed, any eventually existing warpedness between said parts are eliminated and the parts are straightened up.

The locking pin 15 is arranged for being pressed inwards to the chassis frame 2 through the locking recess 13 of the locking yoke 10 thereby pressing the superstructure 3 down into contact with the chassis frame 2, and for being retracted from the locking recess 13 thereby releasing said superstructure. The actuation in the axial direction of the locking pin 15 can be made in any desired way, for instance by means of a hydraulic or pneumatic piston-cylinder apparatus (not illustrated). In the most simple embodiment the actuation means for the locking pin 15 is a screw (indicated in figure 4) which is threaded into the guide sleeve 18 and which, in any conventional way, is coupled to the locking pin 15 so as to allow both screwing of the locking pin in and out of the guide sleeve.

### REFERENCE NUMERALS

- 1: vehicle, truck
- 2: chassis frame
- 3: superstructure
- 4: mounting system
- 5: tie means
- 6: locking pin means
- 7: intermediate frame
- 8: bolt
- 9: transverse guide (for 3)
- 10: yoke (of 5)
- 11: superstructure frame
- 12: rotation pin
- 13: locking recess (of 5)
- 14: bottom surface (of 5)
- 15: locking pin
- 16: wedge formed bottom
- 17: chamfered edges
- 18: guiding sleeve
- 19: guide groove
- 20: guide pin

## Claims

1. Mounting system for releasable superstructures (3) for various types of vehicles or working machine, comprising co-operating means (5, 6) between said releasable superstructure (3) and the vehicle (1), **characterized** in that the mounting system comprises several tie means (5) which are mounted so as to project downwardly from the superstructure (3) on each side thereof and comprising mounting and locking means (4) which are connected to the vehicle chassis (2) or to a prefabricated intermediate frame (7) connected to the vehicle chassis (2), and which comprises a locking pin (15) which is displaceable transversally to the longitudinal direction of the vehicle, and in that the tie means (5) and the locking means (6) are formed with conical surfaces (14, 16) arranged to co-operate with each other, whereby a locking pin (15) which is moved in the direction towards the vehicle chassis (2) and which thereby co-operates with a tie means (5) forces the superstructure (3) down into press contact with the vehicle chassis.

2. Mounting system according to claim 1, **characterized** in that each tie means (5) is formed with a transverse locking recess (13) which is substantially square in a vertical longitudinal cross section view, and which has an inwards-upwards towards the superstructure extending conical bottom (14) and a height which substantially greater than the height of the locking pin (15).

3. Mounting system according to claim 1 or 2, **characterized** in that each tie means (5) is mounted rotatable inwards and outwards about a longitudinal shaft of rotation (12) extending freely through some part of the superstructure (3).

4. Mounting system according to claim 2 or 3, **characterized** in that each tie means (5) is formed as a substantially U-shaped yoke (10) the bottom web part of which is the conical bottom (14) the tie means.

5. Mounting system according to claim 2, 3 or 4, **characterized** in that the locking pin (15) is substantially cylindrical and has a chamfered conical edge (16) at the bottom side thereof extending towards the longitudinal centre of the vehicle, which bottom edge (16) co-operates with the bottom surface (14) of the locking tie means (5).

6. Mounting means according to any of claims 2 - 5, **characterized** in that conical bottom (14) of the locking tie means (5) and/or the conical bottom surface (16) of the locking pin (15) is/are slightly vaulted or convex.

7. Mounting system according to any of claims 2 - 6, **characterized** in that the locking pin (15) is guided in a locking pin means (6) which is mounted in the vehicle chassis (2) and which includes a guide sleeve (18) in which the locking pin (15) is axially displaceable into and out of the locking recess (13) of the tie means (5), respectively.

8. Mounting system according to claim 7, **characterized** in that the locking pin (15) is adapted to be positively displaced in the guide sleeve (18) actuated by a hydraulic or pneumatic piston-cylinder apparatus, or actuated by a screw.

9. Mounting system according to claim 7 or 8, **characterized** in that the locking pin (15) is formed with an axially extending guide groove (19) which co-operates with a stationary guide pin (20) such as to allow only a restricted rotation of the locking pin (15) about its longitudinal axis.

10. Mounting system according to any of the preceding claims, **characterized** in that the stationary locking means (4) is mounted in a prefabricated intermediate frame (7) which, in turn, is mounted in a very accurately predetermined position in the vehicle chassis (2).

## Patentansprüche

1. Befestigungssystem für lösbare Aufbauten (3) für unterschiedliche Arten von Fahrzeugen oder Arbeitsmaschinen, mit zusammenwirkenden Einrichtungen (5, 6) zwischen dem lösbaren Aufbau (3) und dem Fahrzeug (1), dadurch gekennzeichnet, daß das Befestigungssystem mehrere Halteeinrichtungen (5) aufweist, die so angeordnet sind, daß sie vom Aufbau (3) an jeder von dessen Seiten nach unten abstehen, wobei Befestigungs- und Verriegelungseinrichtungen (4) vorgesehen sind, die verbunden sind mit dem Fahrzeugfahrgestell (2) oder mit einem vorgefertigten Zwischenrahmen (7), der mit dem Fahrzeugfahrgestell (2) verbunden ist, und die einen Verriegelungsstift (15) aufweisen, der quer zur Längsrichtung des Fahrzeugs verschiebbar ist, und daß die Halteeinrichtungen (5) und die Verriegelungseinrichtungen (6) mit konischen Flächen (14, 16) ausgebildet sind, die miteinander zusammenzuwirken, wodurch ein Verriegelungsstift (15), der in Richtung auf das Fahrzeugfahrgestell (2) bewegt wird und der dadurch mit einer Halteeinrichtung (5) zusammenwirkt, den Aufbau (3) in einen Preßkontakt mit dem Fahrzeugfahrgestell herunterdrückt.

2. Befestigungssystem gemäß Anspruch 1, dadurch gekennzeichnet, daß jede Halteeinrichtung (5) mit einer Längsverriegelungsaussparung (13) versehen ist, die in einer vertikalen Längsquerschnittaussicht im wesentlichen rechteckig ausgebildet ist und die eine einwärts-aufwärts in Richtung auf den Aufbau verlaufende Unterseite (14) sowie eine Höhe aufweist, die wesentlich größer als die Höhe des Verriegelungsstifts (15) ist.

3. Befestigungssystem gemäß Anspruch 1 oder 2, dadurch gekennzeichnet, daß jede Halteeinrichtung (5) nach innen und außen drehbar um eine längsgerichtete Drehachse (12) montiert ist, die frei durch Teile des Aufbaus (3) verläuft.

4. Befestigungssystem gemäß Anspruch 2 oder 3, dadurch gekennzeichnet, daß jede Halteeinrichtung im wesentlichen als U-förmiger Bügel (10) ausgebildet ist, dessen unteres Stegteil die konische Unterseite (14) der Halteeinrichtung bildet.

5. Befestigungssystem gemäß Anspruch 2, 3 oder 4, dadurch gekennzeichnet, daß der Verriegelungsstift (15) im wesentlichen zylindrisch ausgebildet ist und an seiner Unterseite eine sich in Richtung auf die längslaufende Fahrzeugmitte erstreckende, abgeschrägten konische Kante (16) aufweist, wobei die Unterkante (16) mit der Unterseite (14) der Verriegelungshalteeinrichtung (5) zusammenwirkt.

6. Befestigungssystem gemäß einem der Ansprüche 2 bis 5, dadurch gekennzeichnet, daß die konische Unterseite (14) der Verriegelungshalteeinrichtung (5) und/oder die konischen Unterseite (16) des Verriegelungsstifts (15) leicht gewölbt oder konvex ausgebildet ist/sind.

7. Befestigungssystem gemäß einem der Ansprüche 2 bis 6, dadurch gekennzeichnet, daß der Verriegelungsstift (15) in einer Verriegelungsstifteinrichtung (6) geführt ist, die am Fahrzeugfahrgestell (2) befestigt ist und die eine Führungshülse (18) umfaßt, in der der Verriegelungsstift (15) axial in die Verriegelungsaufnahme (13) der Halteeinrichtung (5) ein- bzw. ausschiebbar ist.

8. Befestigungssystem gemäß Anspruch 7, dadurch gekennzeichnet, daß der Verriegelungsstift (15) in der Führungshülse (18), betätigt durch eine hydraulische oder pneumatische Kolben-Zylindervorrichtung oder betätigt durch eine Schraube, zwangsverschoben werden kann.

9. Befestigungssystem gemäß Anspruch 7 oder 8, dadurch gekennzeichnet, daß der Verriegelungsstift (15) mit einer axial verlaufenden Führungsnut (19) ausgebildet ist, die mit einem feststehenden Führungsstift (20) zusammenwirkt, um nur eine beschränkte Drehung des Verriegelungsstifts (15) um seine Längsachse zuzulassen.

10. Befestigungssystem gemäß einem der vorhergehenden Ansprüche, dadurch gekennzeichnet, daß die feststehende Verriegelungseinrichtung (4) auf einem vorgefertigten Zwischenrahmen (7) befestigt ist, der wiederum in einer sehr exakten Position auf dem Fahrzeugfahrgestell (2) befestigt ist.

## Revendications

1. Système de montage pour superstructures détachables (3) pour divers types de véhicules ou machines opérantes, comprenant des moyens en coopération (5, 6) entre ladite superstructure détachable (3) et le véhicule (1), caractérisé en ce que le système de montage comprend plusieurs moyens d'accouplement (5) qui sont montés de manière à se projeter vers le bas depuis la superstructure (3) sur chaque côté de celle-ci et comprenant des moyens de montage et de verrouillage (4) qui sont reliés au châssis du véhicule (2) ou à un bâti intermédiaire préfabriqué (7) relié au châssis du véhicule (2), et qui comprend une goupille de verrouillage (15) qui est adaptée à être déplacée transversalement à la direction longitudinale du véhicule, et en ce que les moyens d'accouplement (5) et les moyens de verrouillage (6) sont dotés de surfaces coniques (14, 16) agencées pour coopérer entre elles, de manière qu'une goupille de verrouillage (15), qui est déplacée dans la direction vers le châssis du véhicule (2), et qui coopère donc avec un moyen d'accouplement (5), force la superstructure (3) vers le bas en contact de pression avec le châssis du véhicule.

2. Système de montage selon la revendication 1, caractérisé en ce que chaque moyen d'accouplement (5) est doté d'un évidement de verrouillage transversal (13) qui est sensiblement carré selon une vue en coupe transversale longitudinale verticale, et qui comporte une surface inférieure conique s'étendant vers la superstructure vers l'intérieur et vers le haut (14) et a une hauteur qui est un peu plus grande que la hauteur de la goupille de verrouillage (15).

3. Système de montage selon la revendication 1 ou 2, caractérisé en ce que chaque moyen d'accouplement (5) est monté de manière à tourner vers l'intérieur et vers l'extérieur autour d'un arbre longitudinal de rotation (12) s'étendant librement à travers une partie de la superstructure (3).

4. Système de montage selon la revendication 2 ou 3, caractérisé en ce que chaque moyen d'accouplement (5) a la forme d'une flasque sensiblement en forme de U (10) dont la partie d'âme inférieure est la surface inférieure conique (14) du moyen d'accouplement.

5. Système de montage selon la revendication 2, 3 ou 4, caractérisé en ce que la goupille de verrouillage (15) est sensiblement cylindrique et comporte un bord conique chanfreiné (16) sur sa face inférieure s'étendant vers le centre longitudinal du véhicule, lequel bord inférieur (16) coopère avec la surface inférieure (14) du moyen d'accouplement à verrouillage (5).

6. Système de montage selon l'une quelconque des revendications 2 à 5, caractérisé en ce que la surface inférieure conique (14) du moyen d'accouplement à verrouillage (5) et/ou la surface inférieure conique (16) de la goupille de verrouillage (15) est/sont légèrement bombée(s) ou convexe(s).

7. Système de montage selon l'une quelconque des revendications 2 à 6, caractérisé en ce que la goupille de verrouillage (15) est guidée dans un moyen de goupille de verrouillage (6) qui est monté dans le châssis du véhicule (2) et qui comprend un manchon de guidage (18) dans lequel la goupille de verrouillage (15) est adaptée à être déplacée axialement en engagement et en dégagement de l'évidement de verrouillage (13) du moyen d'accouplement (5), respectivement.

8. Système de montage selon la revendication 7, caractérisé en ce que la goupille de verrouillage (15) est adaptée à être déplacée par force dans le manchon de guidage (18), actionnée par un appareil piston-cylindre hydraulique ou pneumatique, ou actionnée par une vis.

9. Système de montage selon la revendication 7 ou 8, caractérisé en ce que la goupille de verrouillage (15) est dotée d'une rainure de guidage s'étendant axialement (19) qui coopère avec une tige de guidage fixe (20) de manière à ne permettre qu'une rotation limitée de la goupille de verrouillage (15) autour de son axe longitudinal.

10. Système de montage selon l'une quelconque des revendications précédentes, caractérisé en ce que le moyen de verrouillage fixe (4) est monté dans un bâti intermédiaire préfabriqué (7) qui, à son tour, est monté dans une position prédéterminée très précisément dans le châssis du véhicule (2).
